# EUROPEAN PATENT SPECIFICATION

(11) **EP 2 180 151 B1**
(45) Date of publication and mention of the grant of the patent: **27.02.2013**
(21) Application number: 08167497.0
(22) Date of filing: 24.10.2008
(51) Int. Cl.: F01L 9/04

(54) **Valve gear assembly for an internal combustion engine**
Ventilgetriebeanordnung für einen Verbrennungsmotor
Ensemble de soupape d'échappement pour moteur à combustion interne

(43) Date of publication of application: 28.04.2010
(73) Proprietor: Delphi Technologies, Inc., Troy, MI 48007 (US)
(72) Inventor: Farah, Philippe, 54400, Longwy (FR)
(74) Representative: Robert, Vincent

(56) References cited:
- EP-A- 1 338 759
- EP-A- 1 445 430
- EP-A- 1 788 201
- EP-A- 1 927 733
- WO-A-2004/013947
- WO-A-2007/022977
- DE-A1-102006 013 100
- DE-A1-102006 023 652
- US-B1- 6 561 149

## Description

### Technical field

The present invention generally relates to the field of internal combustion engines and more specifically to a valve gear assembly for such engine with variable valve actuation.

### Background Art

Valve gear systems with variable valve actuation (VVA) capability have been developed by automotive manufacturers to deliver refined engines that offer strong performances while also balancing fuel economy considerations.

Especially the ability of controlling and varying the valve timing and valve lift permits improving engine performances under certain operating conditions. Another appreciable feature of VVA is the possibility of deactivating certain cylinders of the engines by deactivating the respective valve(s). Cylinder deactivation is indeed regarded as one option to increase fuel economy by deactivating certain cylinders of an engine when there is not a demand for such cylinders.

As it is known in the art, there are many ways in which VVA can be achieved, and one typically distinguishes between cam-driven and camless systems. In cam-driven systems, an intermediate device is interposed between the control cam and the valve to alter the shape of the valve lift event. An example of such camshaft driven VVA is the well-known BMW "Valvetronic" system.

By contrast, camless VVA systems are more flexible than camshaft driven systems, since the valve actuation capability is not limited by the cam profile. Indeed, using e.g. an electromagnetic actuator (e.g. electric motor or solenoid) per valve allows a flexible, fully valve independent lift control. One generally recognized drawback of electromagnetic actuators is their important electrical consumption.

EP 1 338 759 relates to an actuating system for a mode-switching rocker arm device. A cam follower arrangement driven by the camshaft is combined with an actuator lever to engage a locking pin of the rocker arm device. The cam follower is pivotally oscillated relative to an actuator shaft parallel to the camshaft and the actuator lever is pivotable about the actuator shaft and extends in a generally radial direction therefrom. A clutch brake assembly is associated with the actuator shaft and cam follower and operable to selectively couple both elements to transfer the oscillation motion of the follower to the actuating lever. The brake/clutch comprises a brake and a clutch coil and a rotor (68).

US 6,561,149 describes a cam phaser featuring, for its electromagnetic adjustment, a permanent magnet block (29), a yoke block (30) and an irrotational electromagnetic coil block (32). EP 1 788 201 concerns a cam phaser with magnetic gear.

### Object of the Invention

The object of the present invention is to provide an alternative valve gear assembly with variable valve actuation. This is achieved by a valve gear assembly according to claim 1.

### General Description of the Invention

According to the present invention, the actuation of a valve in a valve train of an internal combustion engine is carried out by means of a rotary shaft driven valve actuating system comprising an actuating element associated with the valve and electromagnetic coupling means (connected to the rotary shaft and actuating element) that allow to selectively actuate the valve. The electromagnetic coupling means comprise a field component connected to the rotary shaft and an electric armature connected to the actuating element.

A particular merit of the present invention is that of combining a rotary shaft, preferably driven by the crankshaft, together with an electromagnetic coupling, where one of the principal components of the electromagnetic coupling (i.e. field component) is connected to the rotary shaft and is thus set in motion by the latter. In other words, the drive member of the electromagnetic coupling is set into motion where, with a conventional electric-motor operated valve actuator, only the driven part (rotor) connected to the valve actuating element would move. As it will appear from the following, with the present inventive system a higher mechanical power may be transferred to the driven member and, conversely, less electrical energy may be required for the valve actuation.

Continuing the comparison with respect to a conventional electrical motor where the stator is fixed, it may be noted that the torque typically decreases with increasing rotor speed. By causing the stator to rotate it is possible to lower the differential speed between the field component and armature and thereby obtain a higher torque. Conversely, the gain in mechanical torque lowers the need on electrical power.

Another reason for the efficiency of the present valve gear assembly is that it advantageously directly uses the crankshaft mechanical energy in the valve train. The rotary shaft may be coupled to the crankshaft by any appropriate means, e.g. pulley and belt or chain and sprocket. However, since the valves can be controlled at will by the valve actuating systems, it is not required that the rotary shaft runs at ½ crankshaft speed as is conventional in four stroke engines. In fact, the higher the speed of the rotary shaft, the more advantageous the system.

A further appreciable aspect of the present valve actuating system is that under some circumstances, magnetic coupling between the field component and the armature can be obtained without supplying current to the armature but simply by short-circuiting the armature winding(s). Indeed, a relative movement exists between the armature and field component even when the valve is closed; therefore, short-circuiting the armature coils induces current (due to Lenz's law) which will cause a relative movement between the magnetic coupling components.

As it will be clear to those skilled in the art, there are various ways of designing the electromechanical coupling means so as to provide selective interaction between the rotary shaft and valve actuating element. In particular, axial or radial configurations can be adopted for the armature and field component, the radial configuration being preferred for ease of implementation and compactness.

Preferably, the field component is connected to the rotary shaft and the electric armature to the actuating element. This permits using permanent magnets for the continuously moving field component, which avoids the need for complex electric circuitry as compared to the case where the armature is continuously driven by the rotary shaft.

In one radial configuration (i.e. field component and armature are concentrically arranged) of the electromagnetic means, a tubular output shaft surrounds the rotary shaft and is freely rotatably supported on the latter, the actuating element being connected to the tubular output shaft. The electric armature, which may comprise one or more coils, is mounted on the output shaft since it will undergo a small rotation when energized, e.g. about ¼ of a revolution.

In a preferred embodiment, the field component comprises two concentric annular magnet assemblies separated by an annular gap; and the armature is arranged to rotate in this gap about the same axis.

As for the axial configuration, the armature and field component may be mounted on respective rotatable disks that are arranged face-to face and coaxially, one disk being connected to the rotary shaft and the other to the actuating element.

Valve actuation is controlled by a control unit configured to selectively energize and/or short-circuit the armature conductor(s) of a respective valve actuating system in the valve gear assembly.

The present invention thus proposes a valve gear system with fully independent VVA capability that uses an electromagnetic coupling requiring lower electrical power than conventional electromagnetic valve actuators.

### Brief Description of the Drawings

Further details and advantages of the present invention will be apparent from the following detailed description of a not limiting embodiment with reference to the attached drawings, wherein:
Fig. 1: is a sketch showing, in perspective, a preferred embodiment of the present valve gear assembly; and
Fig. 2: is a principle diagram showing in detail the electromagnetic coupling used in the valve gear of Fig.1, in cross-sectional view.

### Description of a Preferred Embodiment

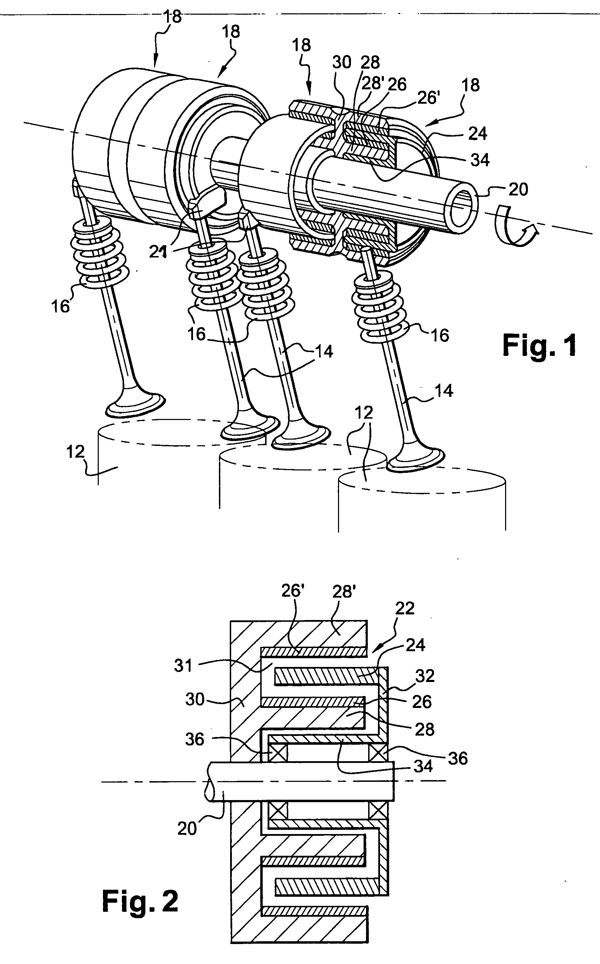

Fig.1 shows a preferred embodiment of the present valve gear assembly 10. Reference sign 12 indicates cylinders of an internal combustion engine provided each with at least one valve 14 associated with a respective port (not shown). Conventionally, the valves 14 are biased in closing direction by means of a spring 16.

For their actuation, each valve 12 is provided with a respective valve actuating system, generally indicated 18, driven by a rotary shaft 20, preferably mechanically coupled to the engine crankshaft e.g. by belt and pulley or chain and sprocket (not shown). The valve actuating system 18 comprises an actuating element 21 operably connected to the valve 14 for actuating the latter in axial direction. This actuating element 21 is connected to a driven member of an electromagnetic coupling, while the drive member of the latter is connected to the rotary shaft 20.

The structure of the electromagnetic coupling as used in the present embodiment is illustrated in detail in Fig.2. The electromagnetic coupling comprises as drive member a field component 22 and an electric armature 24 as driven member. As used herein, an "armature" is one of the two principal components of an electro-mechanical machine such as a motor. The armature is generally a conductor or a conductive coil (or several coils). For descriptive purposes, the term "field component" refers to the second principal component and designates a magnet structure, such as a field winding or field magnet that creates a magnetic field for the armature to interact with. Therefore the field component may include one or more permanent magnets or electro-magnets formed by a conductive coil.

In the present embodiment, the electromagnetic coupling is designed with a radial configuration of the field component 22 and armature 24, i.e. the latter are concentrically arranged. The field component 22 comprises two concentric annular permanent magnet assemblies 26, 26' each mounted on a respective support sleeve 28, 28', the latter being fixed to a radial flange 30 secured to the rotary shaft 20. The annular magnet assemblies 26 and 26' (each consisting of a plurality of circumferentially distributed magnets) are arranged so as to face each other with a radial gap 31 in-between. The armature 24 is designed as an annulus that can rotate inside the gap 31 between the permanent magnets 26 and 26'. The armature 24 is fixed to a radial flange 32 that is mounted on a tubular output shaft 34 surrounding the rotary shaft 20 in a concentrical and coaxial manner. The output shaft 34 is further supported by the rotary shaft 20 via a pair of roller bearings 36, whereby the rotary shaft 20 and output shaft 34 are free to rotate relative to one another. In this embodiment all rotating or rotatable elements have a common axis of revolution: the axis of the rotary shaft 20. It may be noted that while two annular magnet assemblies 26 and 26' are used, one of them would be sufficient.

In order to open the valve, it is necessary to exert a downward actuating force on the valve stem that overcomes the spring force. As can be seen in Fig.1, in this embodiment the actuating element 21 takes the form of a substantially radially extending arm fixed to the output shaft 34 and having its free end bearing on the top of the valve stem. Opening of the valve can thus be performed by rotating the output shaft 34 over a given angle (considering the present configuration, about ¼ of a revolution), which will cause a corresponding motion of the actuating arm; and this can be done as follows.

Being driven by the crankshaft, the rotary shaft 20 is continuously rotating when the engine is running. The same is true for the field component 22, which is connected to the rotary shaft 20. In contrast, when the valve is closed, the armature 24-connected to the actuating arm 21-is not moving. Energizing the armature 24 (i.e. supplying current through the armature winding(s)) will create torque on the output shaft 34 and thus rotate the latter as well as the actuating arm 21 and thereby actuate the valve 16, provided the transmitted torque is sufficient. This torque of course depends on the electrical power supplied to the armature 24.

It is to be kept in mind that the present electromagnetic coupling differs from a conventional e-motor with a fixed stator in that the field component 22 is continuously rotating. And, at it is known by those skilled in the art, for an electric motor with fixed stator, the higher the rotor speed, the lower the available torque load. This, conversely, implies that the lower the differential speed, the higher the torque. Therefore, the use of a rotary field component 22 in the present system permits reducing the differential speed between field component 22 and armature 24, whereby a higher torque can be obtained (for a given electrical power). In practice, less electrical power is needed to reach the same mechanical torque/speed operating point.

Suppressing the current through the armature will of course annihilate the actuating force and the valve will close under the spring force.

It may further be noted that under certain circumstances, it is not necessary to supply current to the armature 24 winding(s) to drive the output shaft 34. Indeed, since the magnetic field is permanently changing about the armature 24 due to rotation of the output shaft 20, electromotive force is created in the armature coils when its ends are short-circuited. According to Lenz's law, the induced current within the armature due to the differential speed will force the armature movement, and therefore will actuate the connected valve. These circumstances will mainly occur at high rotary shaft 20 speed. Further noticeable features of the present embodiment are briefly summarized below. As it clearly appears from Fig.1 the field components 22 of two neighboring valve actuating systems 18 are fixed on a common support structure: one radial flange 30 comprises two pairs of sleeves, one on each side. This provides for compactness and simplifies the valve gear assembly.

This particular radial configuration permits the use of a single rotary drive shaft 20 common to all of the valve actuating systems 18 associated with the valves of this cylinder line. Other radial or axial configurations also permit the use of a common rotary shaft, which is clearly advantageous. However, from the mechanical point of view various constructions can be devised for the rotary shaft and its drive. E.g., one may want to use individual rotary shafts that are individually connected to another common prime mover, or even use drive an electric motor to drive the rotary shaft (although not desirable with respect to power consumption).

In Fig.1 the actuating element 21 is simply illustrated as a pivoting arm capable of pressing on top of the valve stem. Here again, those skilled in the art may devise various ways of designing the actuating element. Another possible design employs a cam rotatably mounted around the rotary shaft 20 and connected to the output shaft 34, the cam acting on the valve stem.

In a further possible design the top of the valve stem is linked to the actuating element by an appropriate coupling, and the actuating element is fixed at the periphery of the output shaft. With such mechanical link, between the actuating element and the valve stem, it is possible to actuate valve not only in opening direction, but also to exert a closing or at least braking force. Opening or braking/closing is done through the electronic control like in typical electric machines i.e. inverting voltage across the armature windings.

In this connection it may be noted that while springs are conventionally used, as in the present embodiment, for closing the valves for rapidity and safety reasons, this may not be required when the valve actuating element is capable of exerting an actuating force in the opening and closing directions.

In the shown embodiment, the electromagnetic coupling means and rotary shaft are configured so that the shaft 20 rotates in the counter-clockwise direction as indicated by the arrow. To open the valve, the armature is supplied so as to rotate in same direction (or the armature may be short-circuited, as explained above).

## Claims

1. Valve gear assembly for an internal combustion engine having at least one valve (14) per engine cylinder (12), said valve gear assembly comprising a rotary shaft driven valve actuating system (18) with an actuating element (21) associated with said valve (14), **characterized in that** said valve actuating system comprises electromagnetic coupling means comprising a field component (22) connected to said rotary shaft (20) and an electric armature (24) connected to said actuating element (21); and a control unit configured to selectively energize and/or short-circuit said armature.

2. Valve gear assembly according to claim 1, wherein said field component (22) and electric armature (24) are concentrically arranged.

3. Valve gear assembly according to claim 2, comprising a tubular output shaft (34) surrounding said rotary shaft (20) and rotatable relative to the latter, said actuating element (21) being connected to said tubular output shaft (34).

4. Valve gear assembly according to claim 4, wherein said electric armature (24) is mounted onto said output shaft (34).

5. Valve gear assembly according to claim 2, wherein
said field component (22) comprises two concentric annular magnet assemblies (26, 26') separated by an annular gap (31); and
said armature (24) is arranged in said gap (31).

6. Valve gear assembly according to claim 5, wherein said annular magnet assemblies (26, 26') comprise permanent magnets and said armature (24) one or more coils.

7. Valve gear assembly according to any one of the preceding claims, wherein said actuating element comprises an actuating arm (21) pivoting around said rotary shaft (20).

8. Valve gear assembly according to any one of claims 1 to 6, wherein said actuating element comprises a cam acting upon said valve stem and pivotingly mounted around said rotary shaft.

9. Valve gear assembly according to claim 1, wherein armature and field component are mounted on respective rotatable, facing disks, the field component bearing disk being connected to said rotary shaft and the armature bearing disk to said actuating element.

10. Valve gear assembly according to any one of the preceding claims, wherein said rotary shaft (20) is driven by the engine crankshaft.

11. Valve gear assembly according to any one of the preceding claims, comprising a plurality of said valve actuating systems (18) associated with respective valves (14) and wherein said rotary shaft (20) commonly drives said plurality of valve actuating systems (18).

12. Valve gear assembly according to any one of the preceding claims, wherein the field components of two neighboring valve actuating systems are fixed on a common support structure mounted on said rotary shaft.

## Patentansprüche

1. Ventilantrieb-Baugruppe für eine Brennkraftmaschine mit zumindest einem Ventil (14) je Motorzylinder (12), wobei die Ventilantrieb-Baugruppe ein von einer rotierenden Welle angetriebenes Ventilbetätigungssystem (18) mit einem Betätigungselement (21) aufweist, das mit dem Ventil (14) assoziiert ist, **dadurch gekennzeichnet, dass** das Ventilbetätigungssystem ein elektromagnetisches Kopplungsmittel aufweist, das eine Feldkomponente (22), die mit der rotierenden Welle (20) verbunden ist, und einen elektrischen Anker (24) aufweist, der mit dem Betätigungselement (21) verbunden ist; und eine Steuerungseinheit, die konfiguriert ist zum selektiven Ansteuern und/oder Ausschalten des Ankers.

2. Ventilantrieb-Baugruppe gemäß Anspruch 1, wobei die Feldkomponente (22) und der elektrische Anker (24) konzentrisch angeordnet sind.

3. Ventilantrieb-Baugruppe gemäß Anspruch 2, die eine rohrförmige Ausgangswelle (34) aufweist, die die rotierende Welle (20) umgibt und relativ zu dieser rotierbar ist, wobei das Betätigungselement (21) mit der rohrförmigen Ausgangswelle (34) verbunden ist.

4. Ventilantrieb-Baugruppe gemäß Anspruch 4, wobei der elektrische Anker (24) auf der Ausgangswelle (34) angebracht ist.

5. Ventilantrieb-Baugruppe gemäß Anspruch 2, wobei
die Feldkomponente (22) zwei konzentrische ringförmige Magnetbaugruppen (26, 26') aufweist, die durch eine ringförmige Lücke (31) getrennt sind; und
der Anker (24) in der Lücke (31) angeordnet ist.

6. Ventilantrieb-Baugruppe gemäß Anspruch 5, wobei die ringförmigen Magnetbaugruppen (26, 26') Permanentmagnete aufweisen und der Anker (24) eine oder mehrere Spule(n) aufweist.

7. Ventilantrieb-Baugruppe gemäß einem der vorhergehenden Ansprüche, wobei das Betätigungselement einen Betätigungsarm (21) aufweist, der um die rotierende Welle (20) schwenkt.

8. Ventilantrieb-Baugruppe gemäß einem der Ansprüche 1 bis 6, wobei das Betätigungselement eine Nocke aufweist, die auf den Ventilschaft wirkt und schwenkbar um die rotierende Welle angebracht ist.

9. Ventilantrieb-Baugruppe gemäß Anspruch 1, wobei der Anker und die Feldkomponente auf jeweiligen rotierbaren, einander zugewandten Scheiben angebracht sind, wobei die Scheibe, die die Feldkomponente trägt, mit der rotierenden Welle verbunden ist und die Scheibe, die den Anker trägt, mit dem Betätigungselement verbunden ist.

10. Ventilantrieb-Baugruppe gemäß einem der vorhergehenden Ansprüche, wobei die rotierende Welle (20) durch die Motorkurbelwelle angetrieben wird.

11. Ventilantrieb-Baugruppe gemäß einem der vorhergehenden Ansprüche, die eine Vielzahl der Ventilbetätigungssysteme (18) aufweist, die mit jeweiligen Ventilen (14) assoziiert sind, und wobei die rotierende Welle (20) die Vielzahl von Ventilbetätigungssystemen (18) gemeinsam antreibt.

12. Ventilantrieb-Baugruppe gemäß einem der vorhergehenden Ansprüche, wobei die Feldkomponenten von zwei benachbarten Ventilbetätigungssystemen auf einer gemeinsamen Trägerstruktur befestigt sind, die an der rotierenden Welle angebracht ist.

## Revendications

1. Ensemble formant mécanisme de soupape pour un moteur à combustion interne ayant au moins une soupape (14) par cylindre (12) du moteur, ledit ensemble formant mécanisme de soupape comprenant un système d'actionnement de soupape (18) entraîné par un arbre rotatif, avec un élément d'actionnement (21) associé à ladite soupape (14), **caractérisé en ce que** ledit système d'actionnement de soupape comprend des moyens de couplage électromagnétiques comprenant un composant de champ (22) connecté audit arbre rotatif (20) et une armature électrique (24) connectée audit élément d'actionnement (21) ; et une unité de commande configurée pour exciter et/ou pour court-circuiter sélectivement ladite armature.

2. Ensemble formant mécanisme de soupape selon la revendication 1, dans lequel ledit composant de champ (22) et ladite armature électrique (24) sont agencés concentriquement.

3. Ensemble formant mécanisme de soupape selon la revendication 2, comprenant un arbre de sortie tubulaire (34) qui entoure ledit arbre rotatif (20) et capable de rotation par rapport à ce dernier, ledit élément d'actionnement (21) étant connecté audit arbre de sortie tubulaire (34).

4. Ensemble formant mécanisme de soupape selon la revendication 4, dans lequel ladite armature électrique (24) est montée sur ledit arbre de sortie (34).

5. Ensemble formant mécanisme de soupape selon la revendication 2, dans lequel
ledit composant de champ (22) comprend deux ensembles à aimant annulaires concentriques (26, 26') séparés par un intervalle annulaire (31) ; et
ladite armature (24) est agencée dans ledit intervalle (31).

6. Ensemble formant mécanisme de soupape selon la revendication 5, dans lequel lesdits ensembles à aimant annulaires (26, 26') comprennent des aimants permanents et ladite armature (24) comprend un ou plusieurs bobinages.

7. Ensemble formant mécanisme de soupape selon l'une quelconque des revendications précédentes, dans lequel ledit élément d'actionnement comprend un bras d'actionnement (21) qui pivote autour dudit arbre rotatif (20).

8. Ensemble formant mécanisme de soupape selon l'une quelconque des revendications 1 à 6, dans lequel ledit élément d'actionnement comprend une came agissant sur ladite tige de soupape et montée en pivotement autour dudit arbre rotatif.

9. Ensemble formant mécanisme de soupape selon la revendication 1, dans lequel l'armature est le composant de champ sont montés sur des disques rotatifs respectifs face à face, le disque portant le composant de champ étant connecté audit arbre rotatif et le disque portant l'armature étant connecté audit élément d'actionnement.

10. Ensemble formant mécanisme de soupape selon l'une quelconque des revendications précédentes, dans lequel ledit arbre rotatif (20) est entraîné par le vilebrequin du moteur.

11. Ensemble formant mécanisme de soupape selon l'une quelconque des revendications précédentes, comprenant une pluralité desdits systèmes d'actionnement de soupape (18) associés à des soupapes respectives (14), et dans lequel ledit arbre rotatif (20) entraîne en commun ladite pluralité de systèmes d'actionnement de soupape (18).

12. Ensemble formant mécanisme de soupape selon l'une quelconque des revendications précédentes, dans lequel les composants de champ de deux systèmes d'actionnement de soupape voisins sont fixés sur une structure de support commune montée sur ledit arbre rotatif.
